# EUROPEAN PATENT APPLICATION

(11) **EP 4 344 321 A1**
(43) Date of publication of application: **27.03.2024**
(21) Application number: 22827479.1
(22) Date of filing: 17.06.2022
(51) Int. Cl.: H04W 72/04, H04W 76/30, H04W 74/08

(54) **INFORMATION TRANSMISSION METHOD AND DEVICE**

(30) Priority: 21.06.2021 CN 202110688046
(71) Applicant: Huawei Technologies Co., Ltd., Shenzhen, Guangdong 518129 (CN)
(72) Inventor: XU, Xiuqiang, Shenzhen, Guangdong 518129 (CN); WANG, Lei, Shenzhen, Guangdong 518129 (CN); WEI, Fan, Shenzhen, Guangdong 518129 (CN); CHEN, Yan, Shenzhen, Guangdong 518129 (CN)
(74) Representative: Maiwald GmbH
(86) International application number: PCT/CN2022/099384
(87) International publication number: WO 2022/267984

(57) **Abstract**

This application provides an information transmission method, including: A first communication apparatus receives resource configuration information from a second communication apparatus, where the resource configuration information includes a first resource that is configured by the second communication apparatus for the first communication apparatus for data transmission. The first communication apparatus releases, based on a preset condition, a second resource to which a first synchronization signal block SSB is mapped, where the second resource is a dedicated resource of the first communication apparatus, and the first resource includes the second resource. According to the technical solution of this application, the preset condition for releasing the dedicated resource is set, and a resource that is not used for a long time can be released in an implicit release manner. This helps to optimize resource utilization and reduces a waste of resources.

## Description

This application claims priority to Chinese Patent Application No. 202110688046.7, filed with the China National Intellectual Property Administration on June 21, 2021 and entitled "INFORMATION TRANSMISSION METHOD AND APPARATUS", which is incorporated herein by reference in its entirety.

### TECHNICAL FIELD

This application relates to the communication field, and more specifically, to an information transmission method and apparatus.

### BACKGROUND

Currently, a network device may configure a transmission resource for a terminal device, for small data transmission (small data transmission, SDT) of the terminal device, for example, random access SDT and grant-free SDT. However, in an existing transmission mechanism, transmission resources cannot be released in a timely manner, causing a waste of resources.

Therefore, an information transmission method is urgently required, to release transmission resources in a timely manner and avoid a waste of resources.

### SUMMARY

This application provides an information transmission method and apparatus, to help reduce a waste of transmission resources.

According to a first aspect, an information transmission method is provided, including: A first communication apparatus receives resource configuration information from a second communication apparatus, where the resource configuration information includes a first resource that is configured by the second communication apparatus for the first communication apparatus for data transmission. The first communication apparatus releases, based on a preset condition, a second resource to which a first synchronization signal block SSB is mapped, where the second resource is a dedicated resource of the first communication apparatus, and the first resource includes the second resource.

According to the technical solution of this application, the preset condition for releasing the dedicated resource is set, and a resource that is not used for a long time can be released in an implicit release manner. This helps to optimize resource utilization and reduces a waste of resources.

With reference to the first aspect, in some implementations of the first aspect, the resource configuration information further includes a resource release indication, and the resource release indication includes the preset condition.

According to the technical solution of this application, the second communication apparatus may add the resource release indication to the resource configuration information, to indicate to release a resource when the preset condition is met. This helps to optimize resource utilization and reduces a waste of resources.

The preset condition includes at least one of the following: M consecutive resources to which the first SSB is mapped are not used, all or a part of the M resources belong to the second resource, and M is a positive integer; S consecutive resources are not used, the S resources belong to the first resource, and S is a positive integer; a resource to which the first SSB is mapped is not used in a first preset time period, and all or a part of the resource belongs to the second resource; the first resource is not used in a second preset time period; or in N times of data transmission, a resource to which the first SSB is mapped is not used, all or a part of the resource belongs to the second resource, and N is a positive integer.

The M resources include: M time-division time-frequency resources used for data transmission; or time-frequency resources used for data transmission in M time-frequency resource configuration periodicities; or time-frequency resources used for data transmission in M periodicities of mapping from SSBs to time-frequency resources.

The S resources include: S time-division time-frequency resources used for data transmission; or time-frequency resources used for data transmission in S time-frequency resource configuration periodicities; or time-frequency resources used for data transmission in S periodicities of mapping from SSBs to time-frequency resources.

With reference to the first aspect, in some implementations of the first aspect, the method further includes: The first communication apparatus transmits data by using the first resource.

With reference to the first aspect, in some implementations of the first aspect, the first resource includes a dedicated resource and a non-dedicated resource, the resource configuration information further includes a resource use indication, and the resource use indication indicates the first communication apparatus to use the dedicated resource to transmit data, or indicates the first communication apparatus to use the dedicated resource and the non-dedicated resource to transmit data.

According to the technical solution of this application, the second communication apparatus configures, for the first communication apparatus, the dedicated resource used for data transmission, so that the first communication apparatus can trigger a data transmission procedure as early as possible when there is a data transmission requirement. This reduces a communication delay, avoids a conflict with another first communication apparatus caused by selecting a same resource, and improves data transmission reliability.

With reference to the first aspect, in some implementations of the first aspect, the method further includes: The first communication apparatus sends resource configuration request information to the second communication apparatus, where the resource configuration request information is used to request the dedicated resource.

According to the technical solution of this application, the first communication apparatus requests, from the second communication apparatus, the dedicated resource used for data transmission, and the second communication apparatus configures, for the first communication apparatus based on the request of the first communication apparatus, the dedicated resource that meets an actual requirement of the first communication apparatus, so that the first communication apparatus can trigger a data transmission procedure as early as possible when there is a data transmission requirement. This reduces a communication delay, avoids a conflict with another first communication apparatus caused by selecting a same resource, and improves data transmission reliability.

According to a second aspect, an information transmission method is provided, including: A second communication apparatus determines resource configuration information, where the resource configuration information includes a first resource that is configured by the second communication apparatus for a first communication apparatus for data transmission and a resource release indication, the resource release indication includes a preset condition, the preset condition is used by the first communication apparatus to determine to release a second resource to which a first SSB is mapped, the second resource is a dedicated resource of the first communication apparatus, and the first resource includes the second resource. The second communication apparatus sends the resource configuration information to the first communication apparatus.

According to the technical solution of this application, the preset condition for releasing the dedicated resource is set, and a resource that is not used for a long time can be released in an implicit release manner. This helps to optimize resource utilization and reduces a waste of resources.

The preset condition includes at least one of the following: M consecutive resources to which the first SSB is mapped are not used, all or a part of the M resources belong to the second resource, and M is a positive integer; or S consecutive resources are not used, the S resources belong to the first resource, and S is a positive integer; or a resource to which the first SSB is mapped is not used in a first preset time period, and all or a part of the resource belongs to the second resource; or the first resource is not used in a second preset time period; or in N times of data transmission, a resource to which the first SSB is mapped is not used, all or a part of the resource belongs to the second resource, and N is a positive integer.

The M resources include: M time-division time-frequency resources used for data transmission; or a time-frequency resource used for data transmission in M time-frequency resource configuration periodicities; or a time-frequency resource used for data transmission in M periodicities of mapping from SSBs to time-frequency resources.

With reference to the second aspect, in some implementations of the second aspect, the first resource includes a dedicated resource and a non-dedicated resource, the resource configuration information further includes a resource use indication, and the resource use indication indicates the first communication apparatus to use the dedicated resource to transmit data, or indicates the first communication apparatus to use the dedicated resource and the non-dedicated resource to transmit data.

With reference to the second aspect, in some implementations of the second aspect, the method further includes: The second communication apparatus receives resource configuration request information from the first communication apparatus, where the resource configuration request information is used to request the dedicated resource.

According to the technical solution of this application, the first communication apparatus requests, from the second communication apparatus, the dedicated resource used for data transmission, and the second communication apparatus configures, for the first communication apparatus based on the request of the first communication apparatus, the dedicated resource that meets an actual requirement of the first communication apparatus, so that the first communication apparatus can trigger a data transmission procedure as early as possible when there is a data transmission requirement. This reduces a communication delay, avoids a conflict with another first communication apparatus caused by selecting a same resource, and improves data transmission reliability.

According to a third aspect, an information transmission apparatus is provided, including: a transceiver unit, configured to receive resource configuration information from a second communication apparatus, where the resource configuration information includes a first resource that is configured by the second communication apparatus for a first communication apparatus for data transmission; and a processing unit, configured to release, based on a preset condition, a second resource to which a first SSB is mapped, where the second resource is a dedicated resource of the first communication apparatus, and the first resource includes the second resource.

According to the technical solution of this application, the preset condition for releasing the dedicated resource is set, and a resource that is not used for a long time can be released in an implicit release manner. This helps to optimize resource utilization and reduces a waste of resources.

With reference to the third aspect, in some implementations of the third aspect, the resource configuration information further includes a resource release indication, and the resource release indication includes the preset condition.

The preset condition includes at least one of the following: M consecutive resources to which the first SSB is mapped are not used, all or a part of the M resources belong to the second resource, and M is a positive integer; or S consecutive resources are not used, the S resources belong to the first resource, and S is a positive integer; or a resource to which the first SSB is mapped is not used in a first preset time period, and all or a part of the resource belongs to the second resource; or the first resource is not used in a second preset time period; or in N times of data transmission, a resource to which the first SSB is mapped is not used, all or a part of the resource belongs to the second resource, and N is a positive integer.

The M resources include: M time-division time-frequency resources used for data transmission; or time-frequency resources used for data transmission in M time-frequency resource configuration periodicities; or time-frequency resources used for data transmission in M periodicities of mapping from SSBs to time-frequency resources.

With reference to the third aspect, in some implementations of the third aspect, the transceiver unit is further configured to transmit data by using the first resource.

With reference to the third aspect, in some implementations of the third aspect, the first resource includes a dedicated resource and a non-dedicated resource, and the resource configuration information further includes a resource use indication. The transceiver unit is specifically configured to transmit data by using the dedicated resource; or transmit data by using the dedicated resource and the non-dedicated resource.

With reference to the third aspect, in some implementations of the third aspect, the transceiver unit is further configured to send resource configuration request information to the second communication apparatus, where the resource configuration request information is used to request the dedicated resource.

According to a fourth aspect, an information transmission apparatus is provided, including: a processing unit, configured to determine resource configuration information, where the resource configuration information includes a first resource that is configured by a second communication apparatus for a first communication apparatus for data transmission and a resource release indication, the resource release indication includes a preset condition, the preset condition is used by the first communication apparatus to determine to release a second resource to which a first SSB is mapped, the second resource is a dedicated resource of the first communication apparatus, and the first resource includes the second resource; and a transceiver unit, configured to send the resource configuration information to the first communication apparatus.

According to the technical solution of this application, the preset condition for releasing the dedicated resource is set, and a resource that is not used for a long time can be released in an implicit release manner. This helps to optimize resource utilization and reduces a waste of resources.

The preset condition includes at least one of the following: M consecutive resources to which the first SSB is mapped are not used, all or a part of the M resources belong to the second resource, and M is a positive integer; or S consecutive resources are not used, the S resources belong to the first resource, and S is a positive integer; or a resource to which the first SSB is mapped is not used in a first preset time period, and all or a part of the resource belongs to the second resource; or the first resource is not used in a second preset time period; or in N times of data transmission, a resource to which the first SSB is mapped is not used, all or a part of the resource belongs to the second resource, and N is a positive integer.

The M resources include: M time-division time-frequency resources used for data transmission; or time-frequency resources used for data transmission in M time-frequency resource configuration periodicities; or time-frequency resources used for data transmission in M periodicities of mapping from SSBs to time-frequency resources.

With reference to the fourth aspect, in some implementations of the fourth aspect, the first resource includes a dedicated resource and a non-dedicated resource, the resource configuration information further includes a resource use indication, and the resource use indication indicates the first communication apparatus to use the dedicated resource to transmit data, or indicates the first communication apparatus to use the dedicated resource and the non-dedicated resource to transmit data.

With reference to the fourth aspect, in some implementations of the fourth aspect, the transceiver unit is further configured to receive resource configuration request information from the first communication apparatus, where the resource configuration request information is used to request the dedicated resource.

According to a fifth aspect, a communication apparatus is provided, including a processor. The processor is coupled to a memory, the memory is configured to store a program or instructions, and when the program or the instructions are executed by the processor, the apparatus is enabled to implement the method in any one of the first aspect, the second aspect, and the implementations of the first aspect and the second aspect.

Optionally, there are one or more processors, and there are one or more memories.

Optionally, the memory may be integrated with the processor, or the memory and the processor are separately disposed.

According to a sixth aspect, a communication system is provided, including a first communication apparatus and a second communication apparatus.

The first communication apparatus is configured to implement the method in the implementations of the first aspect, and the second communication apparatus is configured to implement the method in the implementations of the second aspect.

In a possible design, the communication system further includes another device that interacts with the communication device in the solution provided in embodiments of this application.

According to a seventh aspect, a computer program product is provided. The computer program product includes a computer program or instructions, and when the computer program or the instructions are run on a computer, the computer is enabled to perform the methods in the foregoing aspects.

It should be noted that all or some of the computer program or the instructions may be stored in a first storage medium. The first storage medium may be packaged together with a processor, or may be packaged separately from a processor. This is not specifically limited in embodiments of this application.

According to an eighth aspect, a computer-readable medium is provided. The computer-readable medium stores a computer program or instructions, and when the computer program or the instructions are run on a computer, the computer is enabled to perform the methods in the foregoing aspects.

According to a ninth aspect, a chip system is provided, and includes a memory and a processor. The memory is configured to store a computer program, and the processor is configured to: invoke the computer program from the memory and run the computer program, to enable a communication device in which the chip system is installed to perform the method in any one of the first aspect, the second aspect, and the implementations of the first aspect and the second aspect.

The chip system may include an input chip or interface configured to send information or data, and an output chip or interface configured to receive information or data.

### BRIEF DESCRIPTION OF DRAWINGS

FIG. 1 is a schematic diagram of a communication system 100 to which this application is applicable;
FIG. 2 is a schematic diagram of a communication system 200 to which an embodiment of this application is applicable;
FIG. 3 is a schematic interaction diagram of an example of an information transmission method according to this application;
FIG. 4 is a schematic diagram of an example of consecutive resources in an information transmission method according to this application;
FIG. 5 is a schematic interaction diagram of a specific example of an information transmission method according to this application;
FIG. 6 is a schematic diagram of a structure of an example of an information transmission device according to this application; and
FIG. 7 is a schematic diagram of a structure of an example of an information transmission apparatus according to this application.

### DESCRIPTION OF EMBODIMENTS

The following describes technical solutions of this application with reference to accompanying drawings.

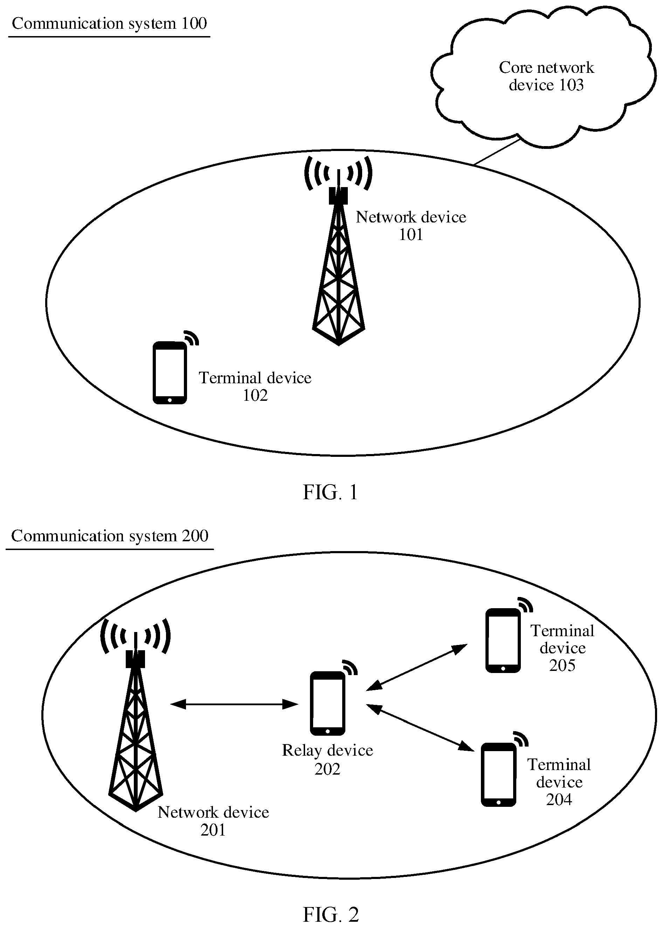

FIG. 1 is a schematic diagram of a communication system 100 to which an embodiment of this application is applicable.

As shown in FIG. 1, the communication system 100 may include a network device 101 and a terminal device 102, and optionally, may further include a core network device 103. The network device 101 can communicate with the core network device 103, and the terminal device 102 can communicate with the network device 101.

The terminal device in embodiments of this application may also be referred to as user equipment, an access terminal, a subscriber unit, a subscriber station, a mobile station, a remote station, a remote terminal, a mobile device, a user terminal, a wireless communication device, a user agent, a user apparatus, or the like. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a wearable device, a terminal in a 5G network, a terminal in a future evolved network, or the like.

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device may alternatively be a terminal device in an internet of things (internet of things, IoT) system. A technical feature of the IoT is to connect an object to a network by using a communication technology, to implement an intelligent network of humanmachine interconnection and object-object interconnection. A specific form of the terminal device is not limited in this application.

It should be understood that in embodiments of this application, the terminal device may be an apparatus configured to implement a function of the terminal device, or may be an apparatus that can support the terminal device in implementing the function, for example, a chip system. The apparatus may be installed in a terminal. In embodiments of this application, the chip system may include a chip, or may include a chip and another discrete component.

The network device in embodiments of this application may be any device having a wireless transceiver function. The device includes but is not limited to an evolved NodeB (evolved NodeB, eNB), a home NodeB (for example, a home evolved NodeB, or a home NodeB, HNB), a baseband unit (base band unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), or the like, or may be a next generation NodeB (next generation NodeB, gNB) in a fifth generation (5th generation, 5G) such as new radio (new radio, NR) wireless communication system, a transmission point (TRP or TP), one or a group of (including a plurality of antenna panels) antenna panels of a base station in a 5G system, or a network node that forms a gNB or a transmission point, for example, a baseband unit (BBU) or a distributed unit (distributed unit, DU).

In some deployments, a gNB may include a central unit (central unit, CU) and a DU. The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The gNB may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in a radio access network (radio access network, RAN), or the CU may be classified into a network device in a core network (core network, CN). This is not limited in this application.

It should be understood that in embodiments of this application, the network device may be an apparatus configured to implement a function of the network device, or may be an apparatus that can support the network device in implementing the function, for example, a chip system. The apparatus may be installed in the network device.

The technical solutions in embodiments of this application may be applied to various communication systems, for example, an LTE frequency division duplex (frequency division duplex, FDD) system, an LTE time division duplex (time division duplex, TDD) system, a 5G system, and vehicle-to-X (vehicle-to-X, V2X) (the V2X may include vehicle to network (vehicle to network, V2N), vehicle to vehicle (vehicle to vehicle, V2V), vehicle to infrastructure (vehicle to infrastructure, V2I), a vehicle to pedestrian (vehicle to pedestrian, V2P), and the like), long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), machine to machine (machine to machine, M2M), device to device (device to device, D2D), or a future evolved communication system, for example, a sixth generation (6th generation, 6G) system.

FIG. 2 is a schematic diagram of a communication system 200 to which an embodiment of this application is applicable.

In the wireless communication system 200, a relay device 202 may be configured to provide a relay service for at least one terminal device 204 and a network device 201. There may be one relay device 202. Alternatively, there may be a plurality of relay devices 202. That is, the plurality of relay devices provide relay services for both the terminal device 204 and the network device 201. The relay device is a terminal type node, and the relay device communicates with the first terminal device through a sidelink sidelink (which is also referred to as a PC5 interface). A form of relay may be a small cell, an integrated access and backhauling (integrated access and backhauling, IAB) node, a DU, a terminal, a TRP, or the like.

The wireless communication systems shown in FIG. 1 and FIG. 2 are merely intended to describe the technical solutions of this application more clearly, and do not constitute a limitation on this application. A person of ordinary skill in the art may know that, with evolution of a network architecture and emergence of a new service scenario, the technical solutions provided in this application are also applicable to similar technical problems provided that an entity in the communication system sends configuration information to another entity and sends data to the another entity, or receives data sent by the another entity, and the another entity receives the configuration information, and sends data to the configuration information sending entity based on the configuration information, or receives data sent by the configuration information sending entity.

For ease of understanding embodiments of this application, the following explains concepts in embodiments of this application.

### 1. User-plane and control-plane protocol stacks

A user plane protocol stack for communication between a terminal device and a network device in this application mainly includes a service data adaptation protocol (service data adaptation protocol, SDAP) layer, a packet data convergence protocol (packet data convergence protocol, PDCP) layer, a radio link control (radio link control, RLC) layer, a media access control (medium access control, MAC) layer, and a physical (physical, PHY) layer.

A control plane protocol stack for communication between the terminal device and the network device in this application mainly includes a non-access stratum (non-access stratum, NAS) layer, a radio resource control (radio resource control, RRC) layer, a PDCP layer, an RLC layer, a MAC layer, and a PHY layer.

### 2. Three RRC states of a terminal device

Currently, there are three RRC states of the terminal device: an RRC idle state (RRC_IDLE state), an RRC inactive state (RRC_INACTIVE state), and an RRC connected state (or active state) (RRC_CONNECTED state).

When the terminal device has established an RRC connection, the terminal device is in the RRC connected state (or active state) or the RRC inactive state. If the terminal device has not established an RRC connection, the terminal device is in the RRC idle state. The RRC inactive state is introduced for the terminal device in 5G NR, and this RRC state is mainly for a case in which "a terminal device that infrequently transmits data is usually kept in the RRC inactive state by a network". The terminal device performs different operations in different RRC states. A process of transition between the three states can be briefly described as follows:
(1) The terminal device is in the RRC idle state at the beginning. When the terminal device needs to transmit data, the terminal device performs a random access procedure to set up an RRC connection to a network device (for example, a base station), and starts to transmit data after entering the RRC connected state (or active state). To set up (setup) the RRC connection, the terminal device sends a connection setup request message such as RRCSetupRequest to the network device (for example, the base station), and receives a connection setup message such as RRCSetup sent by the base station in a procedure of initiating random access.
(2) When the terminal device does not need to transmit data subsequently, the network device (for example, the base station) may release the terminal device, so that the terminal device enters the RRC idle state or the RRC inactive state. For example, the base station sends a release (release) message that carries a suspend indication, for example, RRCRelease with suspend indication, so that the terminal enters the RRC inactive state. For another example, the base station sends a release message such as RRCRelease, so that the terminal device enters the RRC idle state.
(3) The terminal device in the RRC inactive state may further resume to the RRC connected state (or active state) by using a resume (resume) message. For example, the terminal sends RRCResumeRequest and receives RRCResume. Similarly, the network device (for example, the base station) may further release the terminal device, so that the terminal device enters the RRC idle state.

Before 3GPP Release 16, a 5G NR terminal device in the RRC inactive state does not support data transmission. To be specific, the terminal device needs to resume an RRC connection (connection) to enter the RRC connected state (or active state) before transmitting data. However, in some scenarios, a data packet that needs to be transmitted by the terminal device in the RRC inactive state is usually small (that is, small data, small data), and is usually dozens to hundreds of bytes. Signaling required for the terminal to enter the RRC connected state (or active state) from the RRC inactive state is even greater than small data, resulting in unnecessary power consumption and signaling overheads. A specific scenario may cover a smartphone-related service, for example, an instant message of social media, a heartbeat packet or a push message of application software (app), and a non-smartphone-related service, for example, periodic data such as a heartbeat packet of a wearable device, a periodic reading sent by an industrial wireless sensor network, and a smart meter.

Therefore, the terminal device in the inactive state is supported in directly performing small data transmission without performing state switching, so that signaling overheads and power consumption can be significantly reduced.

### 3. Two manners in which a terminal device in an active state performs small data transmission

### (1) Random access (random access, RA) SDT (RA SDT)

Different from conventional RA, RA SDT means that during RA, the terminal device sends uplink user plane data (for simplicity, data described below represents user plane data unless otherwise specified) to a network device (for example, a base station) or receives downlink user plane data. For example, in two-step RA, the terminal device sends uplink data to the network device by using a physical uplink shared channel (physical uplink shared channel, PUSCH) of a MsgA, and receives downlink data sent by the network device by using a physical downlink shared channel (physical downlink shared channel, PDSCH) of a MsgB. In addition to the PUSCH, the MsgA further includes a physical random access channel (physical random access channel, PRACH), used to send a random access preamble Preamble. The preamble is used by the network device to estimate a timing advance (Timing Advance) of the terminal device, so that the terminal device implements uplink synchronization with the network device. In four-step RA, the terminal device sends uplink data to the network device by using a Msg3, or receives, in a Msg4, downlink data sent by the network device. The terminal device sends Preamble by using a Msg1. The network device sends a random access response (random access response, RAR) to the terminal device by using a Msg2, to schedule transmission of the Msg3.

One PRACH time-frequency resource is referred to as a random access channel occasion (RACH occasion, RO), and a combination of one RO and one preamble is referred to as a PRE. That the terminal device selects a PRE means that the terminal device sends a preamble corresponding to the PRE on a PRACH time-frequency resource corresponding to the PRE. One PUSCH time-frequency resource is referred to as a physical uplink shared channel occasion (PUSCH occasion, PO), and a combination of one PO and one demodulation reference signal (demodulation reference signal, DMRS) is referred to as a PRU. That the terminal device selects a PRU means that the terminal device sends a corresponding DMRS and data on a PUSCH time-frequency resource corresponding to the PRU.

### (2) Grant-free (grant-free, GF) SDT

Regardless of which type of random access is used, the terminal device needs to send a preamble to the network device through a PRACH channel, so that the network device estimates a TA of the terminal device. However, in some scenarios, for example, when the terminal device has obtained an accurate TA, or a cell radius is small, the terminal device does not need to obtain a TA again each time before data transmission. In this case, sending a preamble each time actually increases power consumption of the terminal device. Therefore, the 3GPP further introduces uplink grant-free transmission in an idle state and an inactive state, for example, transmission based on a preconfigured uplink resource (pre-configured uplink resource, LTE PUR) in the idle state and NR configured grant (configured grant, CG) transmission (for example, Type 1 CG) in the inactive state. The two types of GF transmission are performed by the network device by using RRC signaling, for example, a system message or other dedicated RRC signaling. An uplink transmission configuration for the terminal device includes one or more of the following parameters: a time domain resource periodicity, an open-loop power control-related parameter, a waveform, a redundancy version sequence, a quantity of repetitions, a frequency hopping mode, a resource allocation type, a quantity of hybrid automatic repeat request (hybrid automatic repeat request, HARQ) processes, a DMRS-related parameter, a modulation and coding scheme table, a resource block group (resource block group, RBG) size, a time domain resource, a frequency domain resource, a modulation and coding scheme (modulation and coding Scheme, MCS), and the like. After receiving the configuration information, if data is to be transmitted, the terminal may immediately perform PUSCH transmission on a configured time-frequency resource by using a configured transmission parameter, and does not need to first send a preamble. This reduces overheads and power consumption.

In GF transmission, one PUSCH time-frequency resource is referred to as a transmission occasion (transmission occasion, TO), and a combination of one TO and one DMRS is referred to as a TRU. That the terminal selects a TRU means that the terminal sends a DMRS corresponding to the TRU on a PUSCH time-frequency resource corresponding to the TRU.

### 4. Synchronization signal/Physical broadcast channel block (synchronization signal/physical broadcast channel block, SSB)

The SSB includes three parts: a primary synchronization signal (primary synchronization signal, PSS), a secondary synchronization signal (secondary synchronization signal, SSS), and a master information block (master Information block, MIB). A network device (for example, a base station) sends a plurality of SSBs in a scanning manner. It may be understood that different SSBs correspond to different spatial directions. A quantity of SSBs is configured by the network device (for example, the base station) by using a system message. NR supports three quantities of SSBs: 4, 8, and 64. Generally, a higher frequency indicates a larger quantity of SSBs and a narrower beam of each SSB. In RA, there is a mapping relationship between SSBs and ROs, and the mapping relationship may be one-to-many, one-to-one, or many-to-one. Similarly, there is also a mapping relationship between SSBs and PREs. The mapping relationship may be one-to-many or one-to-one, and a many-to-one mapping relationship is not supported. When performing 2-step RA or 4-step RA, a terminal device implicitly notifies the network device (for example, the base station) of a selected SSB by using a selected PRE. In this way, the network device (for example, the base station) can send a response message (a MsgB or a Msg2) by using a beam that is the same as that of the SSB to which the PRE is mapped. In this way, when receiving the response message, the terminal device also assumes that a quasi co-location (quasi co-location, QCL) feature is the same as that of the SSB to which the selected PRE is mapped. In this way, the SSB can be implicitly indicated through RA, so that the network device (for example, the base station) can preliminarily determine a location of the terminal device, to perform more accurate beam management. The terminal device measures an SSB sent by the network device (for example, the base station). When a measurement result of an SSB exceeds a preset threshold, the terminal device may select a PRE to which the SSB is mapped, to perform an RA procedure. Similar to RA, in GF transmission, there is also a mapping relationship between SSBs and grant-free transmission resources. For example, there is a mapping relationship between SSBs and TOs or TRUs. The mapping relationship may also be one-to-many, one-to-one, or many-to-one.

It should be understood that this application is not only applicable to the foregoing random access scenarios such as 2-step RA, 4-step RA, and early data transmission (early data transmission, EDT), but also applicable to the foregoing grant-free transmission scenarios such as PRU and CG.

It should be further understood that, although the foregoing does not provide detailed description, this application may be further applicable to a high frequency scenario, for example, a millimeter wave scenario or a THz scenario, or may be applied to a low frequency scenario, for example, 3.5 G.

It should be noted that this application may be applied to not only a terminal device in a connected state or an active state, but also a terminal device in a non-connected state or an idle state.

The following describes the technical solutions of this application by using interaction between a first communication apparatus and a second communication apparatus as an example. The first communication apparatus may be the terminal device described above, for example, the terminal device 102, and the second communication apparatus may be the network device described above, for example, the network device 101.

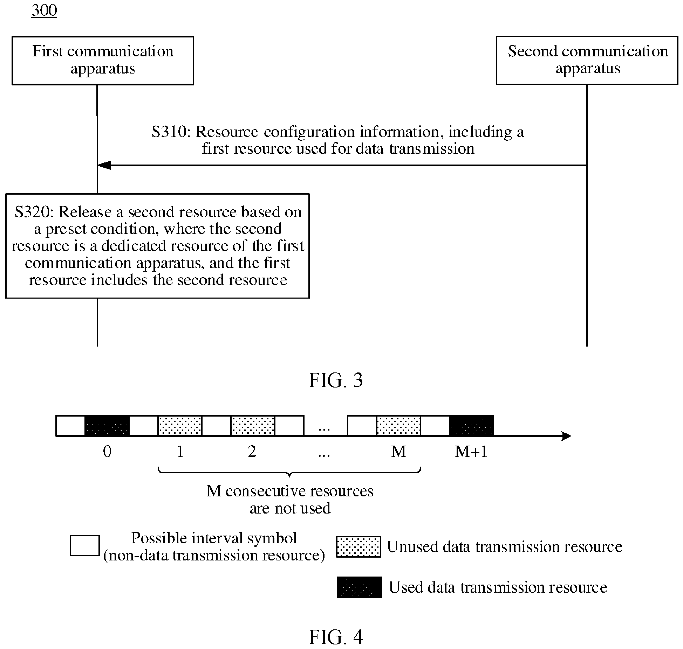

FIG. 3 is a schematic interaction diagram of an example of an information transmission method according to this application.

S310: A first communication apparatus receives resource configuration information from a second communication apparatus, where the resource configuration information includes a first resource that is configured by the second communication apparatus for the first communication apparatus for data transmission.

Optionally, the first communication apparatus transmits data by using the first resource.

In a possible implementation, the first resource may include a dedicated resource and a non-dedicated resource, and the resource configuration information further includes a resource use indication. That the first communication apparatus transmits data by using the first resource includes: The first communication apparatus transmits data by using the dedicated resource based on the resource use indication; or the first communication apparatus transmits data by using the dedicated resource and the non-dedicated resource based on the resource use indication. Optionally, a base station may configure both the dedicated resource and the non-dedicated resource by using one piece of signaling, for example, by using system information (system information, SI) or broadcast information (broadcast information, BI). The base station may alternatively configure the dedicated resource and the non-dedicated resource by using two pieces of signaling, for example, configure the non-dedicated resource by using system information or broadcast information, configure the dedicated resource by using terminal-specific RRC signaling, or configure the dedicated resource by using a Msg4 or a MsgB.

According to the technical solution of this application, the second communication apparatus configures, for the first communication apparatus, the dedicated resource used for data transmission, so that the first communication apparatus can trigger a data transmission procedure as early as possible when there is a data transmission requirement. This reduces a communication delay, avoids a conflict with another first communication apparatus caused by selecting a same resource, and improves data transmission reliability.

Optionally, before receiving the resource configuration information of the second communication apparatus, the first communication apparatus may further send resource configuration request information to the second communication apparatus. The resource configuration request information is used to request the dedicated resource.

According to the technical solution of this application, the first communication apparatus requests, from the second communication apparatus, the dedicated resource used for data transmission, and the second communication apparatus configures, for the first communication apparatus based on the request of the first communication apparatus, the dedicated resource that meets an actual requirement of the first communication apparatus, so that the first communication apparatus can trigger a data transmission procedure as early as possible when there is a data transmission requirement. This reduces a communication delay, avoids a conflict with another first communication apparatus caused by selecting a same resource, and improves data transmission reliability.

S320: The first communication apparatus releases, based on a preset condition, a second resource to which a first synchronization signal block SSB is mapped, where the second resource is a dedicated resource of the first communication apparatus, and the first resource includes the second resource.

Optionally, the resource configuration information further includes a resource release indication, and the resource release indication includes the preset condition.

According to the technical solution of this application, the second communication apparatus may add the resource release indication to the resource configuration information, to indicate to release a resource when the preset condition is met. This helps to optimize resource utilization and reduces a waste of resources.

In this application, the first communication apparatus may alternatively obtain the preset condition in another manner, for example, obtain the preset condition from a local configuration, or obtain the preset condition from another third-party device. This is not limited in this application.

The preset condition includes at least one of the following: M consecutive resources to which the first SSB is mapped are not used, all or a part of the M resources belong to the second resource, and M is a positive integer; S consecutive resources are not used, the S resources belong to the first resource, and S is a positive integer; a resource to which the first SSB is mapped is not used in a first preset time period, and all or a part of the resource belongs to the second resource; the first resource is not used in a second preset time period; or in N times of data transmission, a resource to which the first SSB is mapped is not used, all or a part of the resource belongs to the second resource, and N is a positive integer.

In this embodiment of this application, as shown in FIG. 4, M consecutive time-division resources indicate that there is no other resource between the M resources.

The M resources include: M time-division time-frequency resources (also referred to as data transmission resources for short below) used for data transmission; or data transmission resources in M data transmission resource configuration periodicities; or data transmission resources in M periodicities of mapping from SSBs to data transmission resources. The periodicity of mapping from SSBs to data transmission resources herein is a time length in which each of all SSBs is mapped to a data transmission resource. Generally, the periodicity of mapping from SSBs to data transmission resources is an integer multiple of the data transmission resource configuration periodicity.

It should be understood that a time-division time-frequency resource may be an RO, a PO, or a TO. For example, the M time-division time-frequency resources may be M ROs, M POs, or M TOs. M may be usually a positive integer greater than or equal to 2. However, in some scenarios, to maximize resource utilization, when M is 1, the solution of this application is also applicable.

It should be noted that content included in the S resources is similar to that included in the M resources: S time-division data transmission resources, or data transmission resources in S data transmission resource configuration periodicities, or data transmission resources in S periodicities of mapping from SSBs to data transmission resources.

Optionally, the first communication apparatus sends the resource configuration request information to the second communication apparatus. The resource configuration request information is used to request the dedicated resource. In this way, the second communication apparatus configures, for the first communication apparatus based on a request of the first communication apparatus, the dedicated resource that meets an actual requirement of the first communication apparatus, so that the first communication apparatus can trigger a data transmission procedure as early as possible when there is a data transmission requirement. This reduces a communication delay, avoids a conflict with another first communication apparatus caused by selecting a same resource, and improves data transmission reliability.

According to the technical solution of this application, the preset condition for releasing the dedicated resource is set, and a resource that is not used for a long time can be released in an implicit release manner. This helps to optimize resource utilization and reduces a waste of resources.

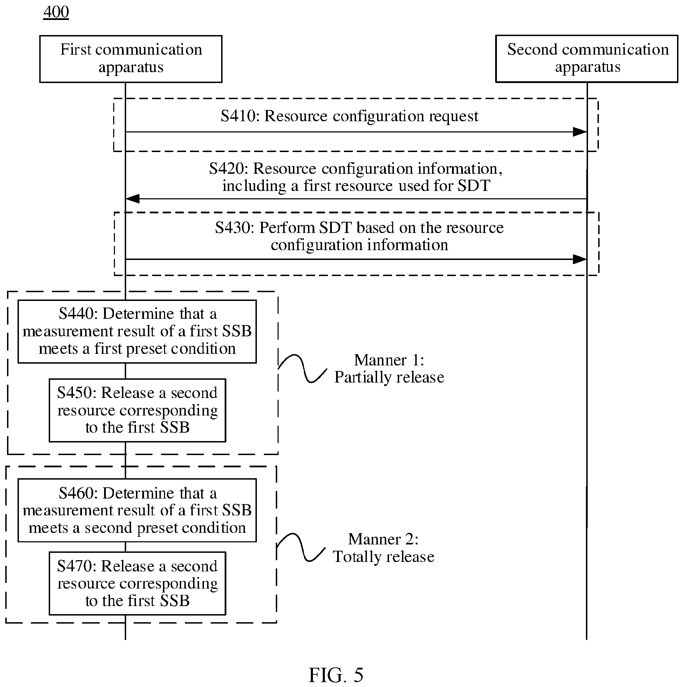

FIG. 5 is a schematic flowchart of a specific example of an information transmission method according to this application.

S410: A first communication apparatus sends a resource configuration request to a second communication apparatus.

The resource configuration request is used to request, from the second communication apparatus, a dedicated resource that is used by the first communication apparatus for SDT.

Optionally, the resource configuration request may include a preferred SSB resource of the first communication apparatus, for example, an SSB index, used to indicate one or more SSBs.

Optionally, the resource configuration request may further include a resource configuration parameter recommended by the first communication apparatus, for example, a parameter of mapping from an SSB to an RO or a PRE, used to indicate a periodicity of mapping from an SSB to an RO, a PRE, a TO, or a TRU or a quantity of ROs, a quantity of PREs, a quantity of TOs, or a quantity of TRUs to which one SSB is mapped in a mapping periodicity.

In a possible implementation, the resource request information may be carried in any terminal-specific RRC message, for example, carried in an uplink RRC message on a dedicated control channel (dedicated control channel, DCCH), or may be carried in a MsgA or Msg3 message of random access.

S420: The second communication apparatus sends resource configuration information to the first communication apparatus.

The resource configuration information includes a first resource that is configured by the second communication apparatus for the first communication apparatus for SDT, and the first resource may include a dedicated resource, and may further include a non-dedicated resource.

It should be noted that, in the NR protocol, for CG SDT, the first resource includes only the dedicated resource. However, with progress of technologies, in future CG SDT, the first resource may also include the non-dedicated resource. This is not limited in this application.

Optionally, the first resource may include a part or all of the following information: a time-frequency resource of an RO, a quantity of ROs, a preamble resource (for example, a quantity or a sequence generation parameter), a mapping relationship between an SSB and an RO or a PRE (for example, a quantity and/or indexes (index) of SSBs to which each RO is mapped, a quantity and/or indexes of SSBs to which each PRE is mapped, and a quantity of ROs or preambles to which each SSB is mapped), a PUSCH time-frequency resource, a quantity ofPUSCHs, a DMRS resource (for example, a port or a sequence generation parameter), a mapping relationship between an RO or PRE and a PO or PRU (for example, a quantity of POs or PRUs to which each RO or PRE is mapped), and the like.

Optionally, the first resource may include a part or all of the following information: a time-frequency resource of a TO, a quantity of TOs, a DMRS resource (such as a port or a sequence generation parameter), a mapping relationship between an SSB and a TO or a TRU (such as a quantity and/or indexes of SSBs to which each TO is mapped, a quantity and/or indexes of SSBs to which each TRU is mapped, and a quantity of TOs or DMRSs to which each SSB is mapped), and the like.

It should be noted that the resource configuration information may be carried in a plurality of messages, for example, carried in any dedicated RRC message of the first communication apparatus (for example, the first communication apparatus 102), for example, carried in a downlink RRC message (more specifically, an RRC reconfiguration message) of a dedicated control channel DCCH, or carried on a physical downlink control channel (physical downlink control channel, PDCCH) or a MAC control element (MAC control element, MAC CE). For another example, the resource configuration information may alternatively be carried in an RRC message sent to a terminal group. For another example, the resource configuration information may alternatively be carried in a MsgB or Msg4 message of random access.

S430: The first communication apparatus performs SDT based on the resource configuration information.

Optionally, the resource configuration information further includes a resource use indication, to indicate the first communication apparatus to perform SDT by using only the dedicated resource, or indicate the first communication apparatus to perform SDT by using the dedicated resource and the non-dedicated resource. The first communication apparatus may perform SDT by using only the dedicated resource or by using the dedicated resource and the non-dedicated resource based on the resource use indication in the resource configuration information.

Optionally, the first communication apparatus may further determine, in another manner, a manner of using the dedicated resource. For example, the first communication apparatus performs SDT by using only the dedicated resource based on local configuration information. For another example, the first communication apparatus performs SDT by using the dedicated resource and the non-dedicated resource based on local configuration information.

For example, in SDT of 2-step RA, the first communication apparatus may select, based on an SSB measurement result, an SSB that meets a condition (for example, an RSRP measurement result of the SSB exceeds a preset threshold). The first communication apparatus selects a PRE to which the SSB is mapped, and selects a PRU to which the PRE is mapped, to send a MsgA.

For another example, in SDT of 4-step RA, the first communication apparatus selects, based on an SSB measurement result, an SSB that meets a condition (for example, an RSRP measurement result of an SSB exceeds a preset threshold). The first communication apparatus selects a PRE to which the SSB is mapped, to send a Msg1.

According to the technical solution of this application, the first communication apparatus requests, from the second communication apparatus, the dedicated resource used for SDT, and the second communication apparatus configures, for the first communication apparatus based on the request of the first communication apparatus, the dedicated resource that meets an actual requirement of the first communication apparatus, so that the first communication apparatus can trigger an SDT procedure as early as possible when there is an SDT requirement. This reduces a communication delay, avoids a conflict with another first communication apparatus caused by selecting a same resource, and improves data transmission reliability.

In this application, the resource configuration information further includes a resource release indication, used to indicate the first communication apparatus to release a second resource corresponding to a first SSB when a preset condition is met. The first resource includes the second resource, and a category of the second resource is a dedicated resource.

The first SSB may represent one or more SSBs that have mapping relationships with the first resource, or the first SSB may represent a set of all SSBs that have mapping relationships with the first resource. Correspondingly, releasing the second resource corresponding to the first SSB may be releasing (partially releasing) a second resource corresponding to one or more SSBs that have mapping relationships with the first resource, where in this case, a corresponding preset condition is a first preset condition; or releasing (totally releasing) a second resource corresponding to a set of all SSBs that have mapping relationships with the first resource, where in this case, a corresponding preset condition is a second preset condition.

Manner 1: Partial release: In this case, the first SSB represents one or more SSBs that have mapping relationships with the first resource.

S440: The first communication apparatus determines that a usage status of a resource to which the first SSB is mapped meets the first preset condition.

The first preset condition specifically includes the following three cases. If any one of the following three cases is met, the first preset condition is met.

Case 1: M consecutive SDT resources to which the first SSB is mapped are not used, where M is a positive integer.

A part of the M consecutive resources to which the first SSB is mapped may belong to the second resource. That is, the M consecutive resources to which the first SSB is mapped include a dedicated resource and a non-dedicated resource. In this case, the first communication apparatus may perform SDT by using a dedicated resource and a non-dedicated resource. A corresponding application scenario may be RA SDT or CG SDT that may support a non-dedicated resource in the future.

Optionally, all of the M consecutive resources to which the first SSB is mapped may belong to the second resource. That is, all the M consecutive resources to which the first SSB is mapped are dedicated resources. For example, the corresponding scenario may be an RA SDT scenario in which only a dedicated resource is used to perform SDT or a CG SDT scenario in an NR protocol.

It should be noted that the M resources include M time-division time-frequency resources used for SDT; or time-frequency resources used for SDT in M time-frequency resource configuration periodicities; or time-frequency resources used for SDT in M periodicities of mapping from SSBs to time-frequency resources.

It should be understood that the time-frequency resource may be an RO, a PO, or a TO. It should be further understood that M may be usually a positive integer greater than or equal to 2. However, in some scenarios, for example, to maximize utilization of a transmission resource, when M is 1, that is, when one time-frequency resource is not used and a preset condition for releasing the resource is met, the solution of this application is also applicable.

Case 2: All resources to which the first SSB is mapped are not used in a first preset time period.

A part of the resources to which the first SSB is mapped may belong to the second resource. That is, all the resources to which the first SSB is mapped include a dedicated resource and a non-dedicated resource. In this case, the first communication apparatus may perform SDT by using a dedicated resource and a non-dedicated resource. A corresponding application scenario is RA SDT or CG SDT that may support a non-dedicated resource in the future.

Optionally, all the resources to which the first SSB is mapped may belong to the second resource. That is, all the resources to which the first SSB is mapped are dedicated resources. For example, the corresponding scenario may be an RA SDT scenario in which only a dedicated resource is used to perform SDT or a CG SDT scenario in a current protocol.

Duration of the first preset time period is not specifically limited in this application. For example, for an instant service, the first preset time period may be a millisecond-level time period. For another example, for a service that has a low timeliness requirement, the first preset time period may be several resource periodicities.

Case 3: The first communication apparatus does not use, in N times of SDT, resources to which the first SSB is mapped, where N is a positive integer.

All the resources to which the first SSB is mapped may belong to the second resource. That is, all the resources to which the first SSB is mapped are dedicated resources. For example, the corresponding scenario may be an RA SDT scenario in which only a dedicated resource is used to perform SDT or a CG SDT scenario in a current protocol.

Optionally, a part of the resources to which the first SSB is mapped may belong to the second resource. That is, the resources to which the first SSB is mapped include a dedicated resource and a non-dedicated resource. In this case, the first communication apparatus may perform SDT by using a dedicated resource and a non-dedicated resource. A corresponding application scenario is RA SDT or CG SDT that may support a non-dedicated resource in the future.

S450: The first communication apparatus releases the second resource corresponding to the first SSB.

In this case, the first SSB indicates one or more SSBs that have mapping relationships with the first resource. According to the technical solution of this application, the preset condition is set, and resources to which one or more SSBs are mapped are released in an implicit release manner, and resources to which other SSBs are mapped are not released. This helps implement resource utilization at a finer granularity.

Manner 2: Totally release: In this case, the first SSB represents a set of all SSBs that have mapping relationships with the first resource.

S460: The first communication apparatus determines that a usage status of a resource to which the SSB set is mapped meets the second preset condition.

The second preset condition specifically includes the following five cases. If any one of the following five cases is met, the second preset condition is met.

Case 1: M consecutive SDT resources to which the first SSB is mapped are not used.

Case 2: All resources to which the first SSB is mapped are not used in a first preset time period.

Case 3: The first communication apparatus does not use, in N times of SDT, resources to which the first SSB is mapped, where N is a positive integer.

It should be understood that Cases 1 to 3 in Manner 2 are the same as Cases 1 to 3 in Manner 1. For brevity, details are not described herein again. A difference lies in that the first SSB in Manner 2 represents a set of all SSBs that have mapping relationships with the first resource, and the first SSB in Manner 1 represents one or more SSBs that have mapping relationships with the first resource.

Case 4: S consecutive resources are not used, the S resources belong to the first resource, and S is a positive integer.

All the S resources may belong to the second resource. That is, all the S resources are dedicated resources. For example, the corresponding scenario may be an RA SDT scenario in which only a dedicated resource is used to perform SDT or a CG SDT scenario in a current protocol.

Optionally, a part of the S resources may belong to the second resource. That is, the S resources include a dedicated resource and a non-dedicated resource. In this case, the first communication apparatus may perform SDT by using a dedicated resource and a non-dedicated resource. A corresponding application scenario is RA SDT or CG SDT that may support a non-dedicated resource in the future.

It should be understood that for specific content represented by the S resources, refer to the foregoing descriptions of the M resources. For brevity, details are not described herein again.

Case 5: The first resource is not used in a second preset time period.

Duration of the second preset time period is not specifically limited in this application. For example, for an instant service, the second preset time period may be a millisecond-level time period. For another example, for a service that has a low timeliness requirement, the second preset time period may be several resource periodicities.

It should be understood that, in this application, the first preset time period and the second preset time period may be the same or different in actual application.

It should be further understood that, in this application, the S consecutive first resources are not used or the first resource is not used in the second preset time period, to indicate that the first communication apparatus no longer has an SDT requirement. In actual application or with development of technologies, there may be another manner to indicate that the first communication apparatus no longer has an SDT requirement, and the manner shall fall within the protection scope of this application.

S470: The first communication apparatus releases the second resource corresponding to the first SSB, where the second resource is a dedicated resource of the first communication apparatus.

In this case, the first SSB represents a set of all SSBs that have mapping relationships with the first resource. According to the technical solutions of this application, all dedicated resources configured by the second communication apparatus for the first communication apparatus can be released simply and efficiently in an implicit release manner by setting the preset condition. This helps reduce a waste of resources.

In a possible implementation, the first communication apparatus may collect statistics on a quantity, a quantity of times, and duration by using a counter and a timer. Sources of the counter and the timer are not limited in this application. For example, when sending the resource configuration information, the second communication apparatus may send a counter parameter and a counter parameter to the first communication apparatus. For another example, the first communication apparatus may obtain the corresponding counter parameter and counter parameter from a local configuration.

In addition, in this application, when all data buffered by the first communication apparatus cannot be sent through SDT once, the first communication apparatus may perform subsequent (Subsequent) transmission. Optionally, the first communication apparatus may perform the subsequent transmission in another manner instead of an RA/CG SDT manner, for example, in a dynamic scheduling-based manner (that is, the second communication apparatus delivers an uplink grant, and the first communication apparatus sends data based on the uplink grant). In this case, the subsequent transmission cannot reflect selection and usage statues of the first communication apparatus on an RA/CG SDT resource. Therefore, when performing the subsequent transmission, the first communication apparatus may suspend the counter and the timer in the foregoing conditions, and continue the counter or the timer after the subsequent transmission ends. To be specific, when determining that the subsequent transmission starts, the first communication apparatus suspends the counter or the timer, and when determining that the subsequent transmission ends, the first communication apparatus continues the counter or the timer.

In this application, the first communication apparatus may further determine a start moment of the subsequent transmission. For example, the first communication apparatus may explicitly or implicitly add indication information to RA SDT transmission (for example, a MsgA, a Msg1, or a Msg3), to notify the second communication apparatus that the first communication apparatus has subsequent transmission. In this case, the first communication apparatus may consider that the subsequent transmission starts immediately after the first communication apparatus sends the MsgA, the Msg1, or the Msg3 (or starts from a next symbol of a symbol occupied by the MsgA, the Msg1, or the Msg3), or may consider that the subsequent transmission starts from an agreed symbol after the first communication apparatus sends the MsgA, the Msg1, or the Msg3 (for example, starts from the first symbol for monitoring a PDCCH or scheduling information). For another example, the first communication apparatus may explicitly or implicitly add indication information to CG SDT transmission, to notify the second communication apparatus that the first communication apparatus has subsequent transmission. In this case, the first communication apparatus may consider that the subsequent transmission starts immediately after the first communication apparatus sends a PUSCH (starts from a next symbol of a symbol occupied by the PUSCH), or may consider that the subsequent transmission starts from an agreed symbol after the first communication apparatus sends the PUSCH (for example, starts from the first symbol for monitoring a PDCCH or scheduling information).

Similarly, the first communication apparatus may also determine an end moment of the subsequent transmission. For example, the first communication apparatus considers that the subsequent transmission ends immediately after a last part of data in the buffer is sent, or may consider that the subsequent transmission ends only after a response of the second communication apparatus to the last part of data is received.

In the foregoing processing manner for the subsequent transmission, the first communication apparatus may more accurately calculate a quantity of unused resources to which the first SSB is mapped, a quantity of times, and duration. This helps to more accurately determine whether a resource usage status meets the preset condition, to help to release a resource in a timely manner based on the preset condition, and reduce a waste of resources.

According to the technical solution of this application, the preset condition for releasing the dedicated resource is set, and a dedicated resource that is not used for a long time can be released in an implicit release manner. This helps to optimize resource utilization and reduces a waste of resources.

It should be understood that sequence numbers of the foregoing processes do not mean an execution sequence. The execution sequence of the processes should be determined based on functions and internal logic of the processes, and should not be constructed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, the method implemented by the communication device may also be implemented by a component (for example, a chip or a circuit) that can be configured in the communication device.

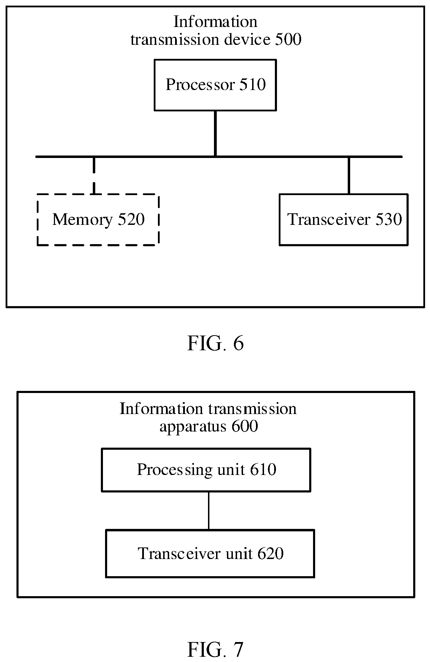

The following describes in detail an information transmission apparatus provided in embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit end device or the receive end device may be divided into function modules based on the foregoing method example. For example, each function module may be obtained through division corresponding to each function, or two or more functions may be integrated in one processing module. The integrated module may be implemented in a form of hardware, or may be implemented in a form of a software function module. It should be noted that, in embodiments of this application, division into the modules is an example, and is merely a logical function division. In actual implementation, another division manner may be used. An example in which each function module is obtained through division based on each corresponding function is used below for description.

FIG. 6 is a schematic block diagram of an example of an information transmission device 500 according to this application. Any device such as the first communication apparatus and the second communication apparatus in either of the method 300 and the method 400 may be implemented by the information transmission device shown in FIG. 6.

It should be understood that the information transmission device 500 may be a physical device, a component (for example, an integrated circuit or a chip) of the physical device, or a function module in the physical device.

As shown in FIG. 6, the information transmission device 500 includes one or more processors 510. Optionally, the processor 510 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented by a transceiver. Optionally, the information transmission device 500 may further include a transceiver 530. The transceiver 530 may also be referred to as a transceiver unit, a transceiver machine, a transceiver circuit, or the like, and is configured to implement a transceiver function.

Optionally, the information transmission device 500 may further include a memory 520. A specific deployment location of the memory 520 is not specifically limited in this embodiment of this application. The memory may be integrated into the processor, or may be independent of the processor. If the information transmission apparatus 500 does not include a memory, the information transmission device 500 may have a processing function, and the memory may be deployed at another location (for example, a cloud system).

The processor 510, the memory 520, and the transceiver 530 communicate with each other through an internal connection path, to transfer a control signal and/or a data signal.

It may be understood that although not shown, the information transmission device 500 may further include another apparatus, for example, an input apparatus, an output apparatus, or a battery.

Optionally, in some embodiments, the memory 520 may store execution instructions used to perform the method in embodiments of this application. The processor 510 may execute the instructions stored in the memory 520 and complete, in combination with other hardware (for example, the transceiver 1530), the steps performed in the following methods. For a specific working process and beneficial effects, refer to the description in the foregoing method embodiments.

The methods disclosed in embodiments of this application may be applied to the processor 510, or may be implemented by the processor 510. The processor 510 may be an integrated circuit chip, and has a signal processing capability. In an implementation process, the steps of the method may be performed through a hardware integrated logic circuit in the processor or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 520 may be a volatile memory or a nonvolatile memory, or may include both a volatile memory and a nonvolatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 7 is a schematic block diagram of an information transmission apparatus 600 according to this application.

Optionally, a specific form of the information transmission apparatus 600 may be a general-purpose computer device or a chip in the general-purpose computer device. This is not limited in this embodiment of this application. As shown in FIG. 7, the information transmission apparatus includes a processing unit 610 and a transceiver unit 620.

Specifically, the information transmission apparatus 600 may be any device in this application, and may implement a function that can be implemented by the device. It should be understood that the information transmission apparatus 600 may be a physical device, a component (for example, an integrated circuit or a chip) of the physical device, or a function module in the physical device.

In a possible design, the information transmission apparatus 600 may be the first communication apparatus (for example, the terminal device 102) in the foregoing method embodiments, or may be a chip configured to implement a function of the first communication apparatus (for example, the terminal device 102) in the foregoing method embodiments.

For example, the transceiver unit is configured to receive resource configuration information from a second communication apparatus, where the resource configuration information includes a first resource that is configured by the second communication apparatus for a first communication apparatus for data transmission. The processing unit is configured to release, based on a preset condition, a second resource to which a first SSB is mapped, where the second resource is a dedicated resource of the first communication apparatus, and the first resource includes the second resource.

Optionally, the transceiver unit is further configured to transmit data by using the first resource.

The first resource includes a dedicated resource and a non-dedicated resource, and the resource configuration information further includes a resource use indication. The transceiver unit is specifically configured to transmit data by using the dedicated resource; or is specifically configured to transmit data by using the dedicated resource and the non-dedicated resource.

Optionally, the transceiver unit is further configured to send resource configuration request information to the second communication apparatus, where the resource configuration request information is used to request the dedicated resource.

It should be further understood that when the information transmission apparatus 600 is a first communication apparatus (for example, the terminal device 102), the transceiver unit 620 in the information transmission apparatus 600 may be implemented by using a communication interface (for example, a transceiver or an input/output interface), and the processing unit 610 in the information transmission apparatus 600 may be implemented by using at least one processor, for example, may correspond to the processor 510 shown in FIG. 6.

Optionally, the information transmission apparatus 600 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In another possible design, the information transmission apparatus 600 may be the second communication apparatus (for example, the network device 101) in the foregoing method embodiments, or may be a chip configured to implement functions of the second communication apparatus (for example, the network device 101) in the foregoing method embodiments.

For example, the processing unit is configured to determine resource configuration information, where the resource configuration information includes a first resource that is configured by a second communication apparatus for a first communication apparatus for data transmission and a resource release indication, the resource release indication includes a preset condition, the preset condition is used by the first communication apparatus to determine to release a second resource to which a first SSB is mapped, the second resource is a dedicated resource of the first communication apparatus, and the first resource includes the second resource. The transceiver unit is configured to send the resource configuration information to the first communication apparatus.

Optionally, the transceiver unit is further configured to receive resource configuration request information from the first communication apparatus, where the resource configuration request information is used to request the dedicated resource.

It should be further understood that when the information transmission apparatus 600 is the second communication apparatus, the transceiver unit 620 in the information transmission apparatus 600 may be implemented by using a communication interface (for example, a transceiver or an input/output interface), for example, may correspond to the communication interface 530 shown in FIG. 6. The processing unit 610 in the information transmission apparatus 600 may be implemented by using at least one processor, for example, may correspond to the processor 510 shown in FIG. 6.

Optionally, the information transmission apparatus 600 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In addition, in this application, the information transmission apparatus 600 is presented in a form of a function module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 600 may be in a form shown in FIG. 7. The processing unit 610 may be implemented by using the processor 510 shown in FIG. 6. Optionally, if the computer device shown in FIG. 6 includes the memory 520, the processing unit 610 may be implemented by using the processor 510 and the memory 520. The transceiver unit 620 may be implemented by using the transceiver 530 shown in FIG. 6. The transceiver 530 includes a receiving function and a sending function. Specifically, the processor is implemented by executing a computer program stored in a memory. Optionally, when the apparatus 600 is a chip, a function and/or an implementation process of the transceiver unit 620 may be alternatively implemented by using a pin, a circuit, or the like. Optionally, the memory may be a storage unit in the chip, for example, a register or a cache. Alternatively, the storage unit may be a storage unit that is in the information transmission apparatus and that is located outside the chip, for example, the memory 520 shown in FIG. 6, or may be a storage unit that is deployed in another system or device and is not in the computer device.

Aspects or features of this application may be implemented as a method, an apparatus, or a product that uses standard programming and/or engineering technologies. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a group of instructions. When the computer program or the group of instructions are run on a computer, the computer is enabled to perform the method in any one of the embodiments shown in FIG. 3 and FIG. 5.

According to the method provided in embodiments of this application, this application further provides a computer-readable storage medium. The computer-readable storage medium stores a program or a group of instructions. When the program or the group of instructions are run on a computer, the computer is enabled to perform the method in any one of the embodiments shown in FIG. 3 and FIG. 5.

According to the method provided in embodiments of this application, this application further provides a communication system, including the foregoing apparatus or device.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and according to, for example, a signal having one or more data packets (for example, data from two components interacting with another component in a local system, a distributed system, and/or across a network such as the Internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving, by a first communication apparatus, resource configuration information from a second communication apparatus, wherein the resource configuration information comprises a first resource that is configured by the second communication apparatus for the first communication apparatus for data transmission; and
releasing, by the first communication apparatus based on a preset condition, a second resource to which a first synchronization signal block SSB is mapped, wherein the second resource is a dedicated resource of the first communication apparatus, and the first resource comprises the second resource.

2. The method according to claim 1, wherein the resource configuration information further comprises a resource release indication, and the resource release indication comprises the preset condition.

3. The method according to claim 1 or 2, wherein the method further comprises:
sending, by the first communication apparatus, resource configuration request information to the second communication apparatus, wherein the resource configuration request information is used to request the dedicated resource.

4. The method according to any one of claims 1 to 3, wherein
the first communication apparatus transmits data on the first resource.

5. An information transmission method, comprising:
determining, by a second communication apparatus, resource configuration information, wherein the resource configuration information comprises a first resource that is configured by the second communication apparatus for a first communication apparatus for data transmission and a resource release indication, the resource release indication comprises a preset condition, the preset condition is used by the first communication apparatus to determine to release a second resource to which a first SSB is mapped, the second resource is a dedicated resource of the first communication apparatus, and the first resource comprises the second resource; and
sending, by the second communication apparatus, the resource configuration information to the first communication apparatus.

6. The method according to claim 5, wherein the method further comprises:
receiving, by the second communication apparatus, resource configuration request information from the first communication apparatus, wherein the resource configuration request information is used to request the dedicated resource.

7. The method according to claim 5 or 6, wherein the method further comprises:
receiving, by the second communication apparatus, data on the first resource.

8. The method according to any one of claims 1 to 7, wherein the preset condition comprises at least one of the following:
M consecutive resources to which the first SSB is mapped are not used, all or a part of the M resources belong to the second resource, and M is a positive integer;
S consecutive resources are not used, the S resources belong to the first resource, and S is a positive integer;
a resource to which the first SSB is mapped is not used in a first preset time period, and all or a part of the resource belongs to the second resource;
the first resource is not used in a second preset time period; or
in N times of data transmission, a resource to which the first SSB is mapped is not used, all or a part of the resource belongs to the second resource, and N is a positive integer.

9. The method according to claim 8, wherein the M resources comprise:
M time-division time-frequency resources used for data transmission; or
time-frequency resources used for data transmission in M time-frequency resource configuration periodicities; or
time-frequency resources used for data transmission in M periodicities of mapping from SSBs to time-frequency resources.

10. The method according to claim 8 or 9, wherein the S resources comprise:
S time-division time-frequency resources used for data transmission; or
time-frequency resources used for data transmission in S time-frequency resource configuration periodicities; or
time-frequency resources used for data transmission in S periodicities of mapping from SSBs to time-frequency resources.

11. The method according to any one of claims 1 to 10, wherein
the first resource comprises the dedicated resource and a non-dedicated resource, and the resource configuration information further comprises a resource use indication; and
the resource use indication indicates the first communication apparatus to use the dedicated resource to transmit data, or
indicates the first communication apparatus to use the dedicated resource and the non-dedicated resource to transmit data.

12. An information transmission apparatus, comprising:
a transceiver unit, configured to receive resource configuration information from a second communication apparatus, wherein the resource configuration information comprises a first resource that is configured by the second communication apparatus for a first communication apparatus for data transmission; and
a processing unit, configured to release, based on a preset condition, a second resource to which a first SSB is mapped, wherein the second resource is a dedicated resource of the first communication apparatus, and the first resource comprises the second resource.

13. The apparatus according to claim 12, wherein the resource configuration information further comprises a resource release indication, and the resource release indication comprises the preset condition.

14. The apparatus according to claim 12 or 13, wherein the transceiver unit is further configured to send resource configuration request information to the second communication apparatus, wherein the resource configuration request information is used to request the dedicated resource.

15. The apparatus according to any one of claims 12 to 14, wherein the transceiver unit is further configured to transmit data on the first resource.

16. An information transmission apparatus, comprising:
a processing unit, configured to determine resource configuration information, wherein the resource configuration information comprises a first resource that is configured by the second communication apparatus for a first communication apparatus for data transmission and a resource release indication, the resource release indication comprises a preset condition, the preset condition is used by the first communication apparatus to determine to release a second resource to which a first SSB is mapped, the second resource is a dedicated resource of the first communication apparatus, and the first resource comprises the second resource; and
a transceiver unit, configured to send the resource configuration information to the first communication apparatus.

17. The apparatus according to claim 16, wherein the transceiver unit is further configured to receive resource configuration request information from the first communication apparatus, wherein the resource configuration request information is used to request the dedicated resource.

18. The apparatus according to claim 16 or 17, wherein the transceiver unit is further configured to receive data on the first resource.

19. The apparatus according to any one of claims 12 to 18, wherein the preset condition comprises at least one of the following:
M consecutive resources to which the first SSB is mapped are not used, all or a part of the M resources belong to the second resource, and M is a positive integer;
S consecutive resources are not used, the S resources belong to the first resource, and S is a positive integer;
a resource to which the first SSB is mapped is not used in a first preset time period, and all or a part of the resource belongs to the second resource;
the first resource is not used in a second preset time period; or
in N times of data transmission, a resource to which the first SSB is mapped is not used, all or a part of the resource belongs to the second resource, and N is a positive integer.

20. The apparatus according to claim 19, wherein the M resources comprise:
M time-division time-frequency resources used for data transmission; or
time-frequency resources used for data transmission in M time-frequency resource configuration periodicities; or
time-frequency resources used for data transmission in M periodicities of mapping from SSBs to time-frequency resources.

21. The method according to claim 19 or 20, wherein the S resources comprise:
S time-division time-frequency resources used for data transmission; or
time-frequency resources used for data transmission in S time-frequency resource configuration periodicities; or
time-frequency resources used for data transmission in S periodicities of mapping from SSBs to time-frequency resources.

22. The apparatus according to any one of claims 12 to 21, wherein
the first resource comprises the dedicated resource and a non-dedicated resource, and the resource configuration information further comprises a resource use indication; and
the resource use indication indicates the first communication apparatus to use the dedicated resource to transmit data, or
indicates the first communication apparatus to use the dedicated resource and the non-dedicated resource to transmit data.

23. A communication apparatus, comprising a processor, wherein the processor is coupled to a memory, the memory is configured to store a program or instructions, and when the program or the instructions are executed by the processor, the apparatus is enabled to perform the method according to any one of claims 1 to 11.

24. The apparatus according to claim 23, further comprising the memory.

25. A computer-readable storage medium, wherein the computer-readable storage medium stores a computer program or instructions, and when the computer program or the instructions are executed by a processor, the method according to any one of claims 1 to 11 is performed.

26. A computer program product comprising instructions, wherein when the computer program product runs on a computer, the method according to any one of claims 1 to 11 is performed.

27. A chip system, comprising a processor, configured to invoke a computer program from a memory and run the computer program, so that a communication apparatus in which the chip system is installed implements the method according to any one of claims 1 to 11.

28. A communication apparatus, comprising a processor and an interface, wherein the interface is configured to receive and send a signal, and the processor is configured to perform the method according to any one of claims 1 to 11.

29. A communication system, comprising the communication apparatus according to any one of claims 12 to 15 and the communication apparatus according to any one of claims 16 to 22.
